Europäisches Patentamt

European Patent Office

Office européen des brevets

(19)

(11) Numéro de publication : **0 326 454 B1**

(12) **FASCICULE DE BREVET EUROPEEN**

(45) Date de publication du fascicule du brevet :
18.09.91 Bulletin 91/38

(51) Int. Cl.⁵ : **G01P 3/48**

(21) Numéro de dépôt : **89400109.8**

(22) Date de dépôt : **13.01.89**

(54) Montage de palier à roulement avec dispositif capteur.

(30) Priorité : **29.01.88 FR 8801034**

(43) Date de publication de la demande :
**02.08.89 Bulletin 89/31**

(45) Mention de la délivrance du brevet :
**18.09.91 Bulletin 91/38**

(84) Etats contractants désignés :
**DE ES GB IT SE**

(56) Documents cités :
**DE-A- 2 505 802**
**DE-A- 2 930 223**
**DE-B- 3 526 645**
**FR-A- 2 343 254**
**FR-A- 2 599 794**

(73) Titulaire : **S.N.R. ROULEMENTS**
**Boîte Postale 17 1, rue des Usines**
**F-74010 Annecy Cédex (FR)**

(72) Inventeur : **Peilloud, Fernand**
**Hery S/Alby**
**F-74540 Alby S/Cheran (FR)**

(74) Mandataire : **Ernst-Schonberg, Michel**
**REGIE NATIONALE DES USINES RENAULT (S.**
**0267) 8 & 10, avenue Emile Zola**
**F-92109 Boulogne Billancourt Cédex (FR)**

EP 0 326 454 B1

Jouve, 18, rue Saint-Denis, 75001 PARIS

## Description

L'invention concerne un montage de palier à roulement avec dispositif capteur latéral du type comportant au moins une bague fixe, une bague tournante, des coqs roulants disposés entre lesdites bagues, un élément codeur solidaire en rotation de la bague tournante et un élément capteur d'informations et d'élaboration de signaux maintenu en position par rapport à la bague fixe.

L'invention concerne plus particulièrement un montage appliqué à la réalisation d'appareils de mesure de vitesses de rotation d'un organe.

La publication DE-A-2930223 décrit un dispositif mesureur de la vitesse dans lequel le dispositif capteur est disposé entre deux paliers.

La publication DE-A-2505802 décrit un dispositif de mesure optique de la vitesse rapporté sur le roulement par des moyens de fixation additionnels ou intégré dans des roulements spéciaux.

Il existe un besoin de structures unitaires simples permettant de bénéficier de la fiabilité et de la précision de rotation de roulements conventionnels auxquels on associe des dispositifs capteur de conception simple.

Selon l'invention, le montage du capteur est réalisé conformément à la caractéristique de la revendication principale. L'élément codeur peut être, à titre d'exemple non limitatif, un anneau aimanté multipôles. Dans ce cas, l'élément capteur est une sonde à effet hall ou une magnéto-résistance conformément au dispositif capteur décrit dans la publication FR A 2599794. Avantageusement les capteurs seront associés à un circuit électronique de traitement du signal dans le but de réaliser des ensembles prêts à recevoir un connecteur extérieur.

Le capteur et son circuit de traitement seront par exemple fixés à un disque formé d'une matière plastique moulée, telle qu'une résine époxy portant une prise ou des plots de réception d'un connecteur.

En association avec un roulement, le palier ainsi réalisé trouve avantageusement application dans la réalisation de dispositifs tachymétriques pour axes et arbres tournants, de mesureurs de vitesse de défilement ou de dispositifs de comptage unitaire.

Selon un mode de réalisation de l'invention, le capteur ou plus généralement le circuit de traitement du signal est supporté par un disque porteur d'un circuit imprimé et de connections débouchant dans une prise de connecteur coaxialement au roulement.

D'autres caractéristiques et avantages du palier apparaîtront à la lecture d'exemples de réalisation de celui-ci en référence au dessin annexé dans lequel

— la figure 1 représente une vue en coupe longitudinale d'un montage de palier de mesure de vitesse de rotation ou de défilement et de comptage unitaire.

— la figure 2 est une vue en coupe longitudinale d'un tachymètre faisant application d'un palier conforme à l'invention.

— la figure 3 est une vue en coupe longitudinale partielle d'une variante de réalisation du tachymètre conforme à la figure 2 recevant une douille de montage sur un arbre tournant.

— la figure 4 est une vue en élévation d'un moyeu adaptable au tachymètre conforme à la figure 2 selon une variante de réalisation représentée à la figure 3.

— la figure 5 représente une vue en coupe longitudinale d'un palier à axe tournant conforme à l'invention.

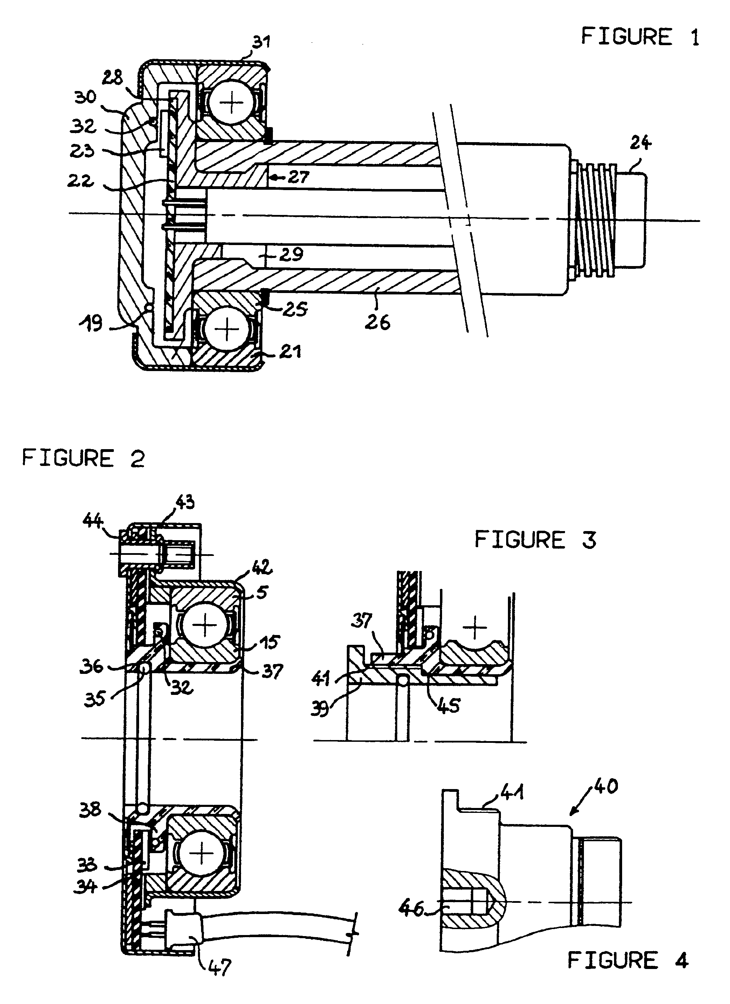

La figure 1 représente un montage d'application du palier avec dispositif capteur de la vitesse de rotation d'un galet tournant permettant la mesure de la vitesse de défilement d'un matériau en contact avec ledit galet, ou bien le comptage unitaire d'éléments à condition que le pourtour extérieur du galet soit agencé pour être entraîné en rotation par lesdits éléments.

En référence à la figure 1, la bague intérieure fixe 25 du roulement est montée sur un axe creux 26 qui sert de support à l'ensemble du palier. La bague intérieure 25 est immobilisée axialement entre un anneau d'arrêt et contre la face extérieure d'un disque support 28 qui se prolonge axialement par un moyeu 27 disposé coaxialement au roulement et dans le plan de ce dernier. Ce moyeu est constitué par une série de languettes flexibles 29 réalisant conjointement une portée et la rétention axiale du disque support 28 par rapport à l'axe 26.

La face extérieure du disque support 28 porte l'élément capteur 23 associé lui-même à un disque 22 logé dans un lamage à la face extérieure du disque support 28. Le disque 22 peut avantageusement porter un circuit de traitement du signal ou un microprocesseur associés au capteur 23 selon une technique connue de réalisation de circuits à composants électroniques et sa partie centrale porte les raccords d'un connecteur extérieur 24 monté sur l'axe 26 coaxial audit connecteur et d'un diamètre supérieur au diamètre dudit connecteur.

La partie tournante du montage est constituée par la bague extérieure 21 tournante sur laquelle prend appui un disque-tournant 30 formant couvercle en appui sur la bague 21. Le disque 30 et la bague 21 sont rendus solidaires par une douille cylindrique 31 dont les bords latéraux sont respectivement sertis sur la bague 21 et le disque 30.

La douille cylindrique 31 sert éventuellement de support à des agencements non représentés sur la figure 1, destinés à coopérer avec l'organe ou le matériau dont on veut mesurer la vitesse de rotation ou de défilement ou bien avec les éléments dont on veut assurer le comptage unitaire. Cet agencement peut par exemple consister en un bandage en matériau de type élastomère pour les applications relatives aux mesures de vitesse et de défilement. Dans ce cas, il suffira d'assurer le contact entre ledit bandage et l'arbre dont on veut mesurer la vitesse de rotation ou le matériau dont on veut mesurer la vitesse de défilement. Pour le comptage unitaire d'éléments, il suffit de concevoir un bandage dont le profil extérieur est une répétition de profils unitaires tels qu'ils engendrent au passage de chaque élément la rotation du palier d'une fraction de tour correspondant au pas de réalisation desdits profils unitaires.

La face interne du disque 30 porte une rainure circulaire 19 dans laquelle est moulé l'élément codeur 32 rendu ainsi solidaire en rotation de l'ensemble constitué par la bague extérieure 21 du roulement, le disque 30 et la douille cylindrique 31.

En référence à la figure 2, on a représenté un tachymètre pour arbre tournant dont le roulement matérialisé par ses bagues 5, 15 est monté sur un moyeu 37 à portée cylindrique disposé coaxialement au roulement et dans le plan de ce dernier. Le moyeu 37 qui peut être en matière plastique comporte un disque périphérique 38 qui porte sur sa face extérieure l'élément codeur 32 logé dans une rainure.

L'élément codeur 32 tourne devant le capteur 33 associé à un deuxième disque 34, ce dernier pouvant avantageusement porter un circuit de traitement du signal ou un microprocesseur associés au capteur 33 comme décrit en référence à la figure 1. Le disque 34 porte en outre les raccords d'un connecteur 47 qui s'étend par exemple dans l'espace ménagé entre deux douilles cylindriques 42 et 43.

Le disque 34 est rendu solidaire de la bague extérieure fixe 5 du roulement par l'intermédiaire des 2 douilles cylindriques 42 et 43 assemblées par rivetage à l'aide de rivets creux 44 dont l'orifice axial permet d'assurer l'arrêt en rotation de la partie fixe du tachymètre par tout moyen connu.

Le moyeu 37 portant l'élément codeur 32 délimite un espace de montage portant le système de retenue axiale du moyeu sur l'arbre dont on veut mesurer la vitesse de rotation. Selon la figure 2, la retenue axiale du moyeu 37 sur un arbre non représenté s'effectue par un anneau élastique 35 engagé dans une rainure circulaire 36 intérieure au moyeu.

Selon un autre mode de réalisation tel que représenté sur la figure 3, la retenue axiale du moyeu 37 s'opère par l'intermédiaire d'une douille 39 dont le diamètre intérieur est adapté au diamètre de l'arbre dont on veut mesurer la vitesse de rotation. Cette douille, qui porte un anneau élastique tel que décrit précédemment est rendue solidaire du moyeu 37 par l'intermédiaire du filetage 41 vissé dans un taraudage du moyeu 37, ce dernier étant limité axialement par un épaulement 45 de mise en butée axiale de la douille 39.

Selon un autre mode de réalisation tel que représenté sur la figure 4 la douille 39 peut être remplacée par un arbre 40 muni d'un filetage 41 vissé dans le moyeu 37 comme décrit précédemment. L'arbre 40 peut en outre être équipé d'une empreinte 46 de réception d'un organe de vissage.

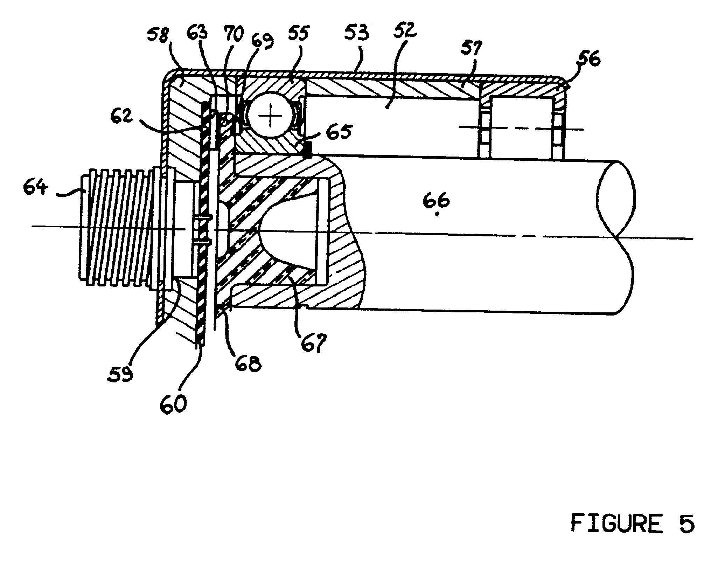

La figure 5 représente un montage d'application du palier avec dispositif capteur de vitesse de rotation d'un axe tournant ou bien permettant la mesure de la vitesse de rotation d'un organe de transmission, tel que poulie ou roue à engrenage, monté à immobilisation sur ledit axe.

Le palier conforme à la figure 5 comporte des bagues extérieures fixes immobilisées dans une chambre 52 délimitée par un capot cylindrique 53 dans laquelle sont logées les bagues fixes 55, 56 d'un roulement à billes et d'un roulement à rouleaux. Les bagues 55, 56 sont entretoisées par une douille 57. Un disque fixe 58 qui se prolonge axialement par une couronne en appui sur la bague 55 est muni d'un perçage axial 59 et d'une face intérieure 60 dans laquelle est délimité le logement de l'élément capteur monté sur un disque plan 62. Le disque 62 porte le circuit imprimé du capteur 63 qui peut être associé avantageusement à un circuit de traitement du signal ou à un micro processeur comme décrit précédemment. La partie centrale du disque 62 porte les raccords d'une prise 64 d'un connecteur extérieur qui s'étend axialement au travers du disque 58 et du capot 53.

La partie tournante du palier est constituée par la bague 65 du roulement qui tourne conjointement avec un axe 66 sur lequel elle est montée à ajustage serré et immobilisée axialement. L'axe 66 possède un trou borgne dans lequel est emmanché le moyeu 67 d'un disque 68 dont une face s'étend au contact de la bague 65 du roulement. L'autre face du disque 68 porte une rainure circulaire 69 dans laquelle est logé un élément codeur 70 monté à déplacement conjointement avec l'axe devant l'élément capteur 63.

Dans le but de réduire l'inertie du disque 68 porteur du codeur 70, le moyeu 67 de celui-ci possède une portée cylindrique qui s'étend coaxialement au roulement à bagues 55, 65 et dans le plan de celui-ci.

L'axe cylindrique 66 peut éventuellement servir de support à un agencement non représenté sur la figure 5. Cet agencement consiste par exemple en un organe de transmission, tel que poulie ou roue à engrenage, monté sur ledit axe.

Dans ce cas, il suffira d'établir, par tous moyens connus, un contact à immobilisation entre l'axe 66 et ledit organe de transmission.

Sans sortir du cadre de l'invention, il est bien évident que le dispositif capteur peut être de tout type connu. De même, l'invention n'est nullement limitée au mode de réalisation décrit et représenté, donné à titre d'exemple.

En particulier, elle englobe les moyens équivalents techniques des moyens décrits ou leurs combinaisons si celles-ci sont réalisées dans l'esprit de l'invention ou mises en oeuvre dans le cadre d'une mesure de vitesse de rotation.

## Revendications

1. Montage de palier à roulement avec dispositif capteur latéral du type comportant au moins une bague (25, 5, 55) fixe, une bague (21, 15, 65) tournante, des corps roulants disposés entre lesdites bagues, un élément codeur (32, 70) disposé dans une rainure circulaire portée par la face d'un disque (30, 38, 68) tournant devant un élément capteur (23, 33, 63) qui est solidaire en rotation de la bague (21, 15, 65) tournante, caractérisé par le fait que l'élément capteur (23, 33, 63) est fixe sur la face d'un autre disque (28, 34, 62) fixe qui est solidaire de la bague (25, 5, 55) fixe et par le fait que l'un ou l'autre des éléments codeur et capteur se prolongent axialement par un moyeu (27, 37, 67) à portée cylindrique disposé coaxialement au roulement et entre les faces latérales de la bague tournante (21, 15, 65) de ce dernier.

2. Montage selon la revendication 1, caractérisé par le fait que le disque (28, 34, 62) porte capteur (23, 33, 63) porte, en outre, un circuit de traitement du signal ou un micro-processeur ainsi que les raccords d'un connecteur (24, 47, 64).

3. Montage selon la revendication 2, caractérisé par le fait que le connecteur (24, 64) est disposé coaxialement au roulement et présente un diamètre inférieur au diamètre de la partie fixe du dispositif tel que l'axe (26) ou un capot cylindrique (53).

4. Montage selon la revendication 3, caractérisé par le fait que le moyeu (37) de l'élément codeur délimite un espace de montage portant un moyen (35) de rétention axiale du moyeu.

5. Montage selon l'une quelconque des revendications 1 et 4, caractérisé par le fait que le moyen de rétention axiale du moyeu est constitué par un anneau de montage (35) engagé dans une gorge circulaire du moyeu.

6. Montage selon l'une quelconque des revendications 1 et 4, caractérisé par le fait que le moyen de rétention axiale du moyeu s'opère par l'intermédiaire d'une douille (39) ou d'un arbre (40) portant un filetage (41) vissé dans un taraudage du moyeu, limité axialement par un épaulement (45) de mise en butée desdits douille (39) et arbre (40).

## Patentansprüche

1. Wälzlageranordnung, mit einem seitlichen Meßfühler mit wenigstens einem feststehenden Ring (25, 5, 55), einem sich drehenden Ring (21, 15, 62), Wälzkörpern zwischen diesen Ringen, einem Meßwertgeber (32, 70), der in einer kreisförmigen Nut angeordnet ist, die sich auf einer Fläche einer sich vor einem Fühler (23, 33, 63) drehenden Scheibe (30, 38, 68) befindet, der drehfest mit dem sich drehenden Ring (21, 15, 65) verbunden ist, dadurch gekennzeichnet, daß der Meßfühler (23, 33, 63) auf der Fläche einer anderen feststehenden Scheibe (28, 34, 62) befestigt ist, die mit dem feststehenden Ring (25, 5, 55) verbunden ist und daß entweder der Meßwertgeber oder der Meßwertfühler axial durch eine Nabe (27, 37, 67) mit zylindrischer Anschlagfläche verlängert ist, die koaxial zum Lager und zwischen den Seitenflächen des sich drehenden Ringes (21, 15, 65) und des letzteren angeordnet ist.

2. Anordnung nach Anspruch 1, dadurch gekennzeichnet, daß die den Fühler (23, 33, 63) tragende Scheibe (28, 34, 62) außerdem einen Signalverarbeitungsschaltkreis oder einen Mikroprozessor trägt sowie Verbindungsanschlüsse (24, 47, 64).

3. Anordnung nach Anspruch 2, dadurch gekennzeichnet, daß die Verbindung (24, 64) koaxial zum Lager angeordnet ist und einen Durchmesser aufweist, der kleiner ist, als der Durchmesser des feststehenden Abschnitts der Anordnung, z.B. einer Achse (26) oder einer zylindrischen Kappe (53).

4. Anordnung nach Anspruch 3, dadurch gekennzeichnet, daß die Nabe (37) des Meßwertgebers einen Montageraum begrenzt, in dem eine axiale Halteanordnung (35) für die Nabe vorgesehen ist.

5. Anordnung nach einem der Ansprüche 1 bis 4, dadurch gekennzeichnet, daß die axiale Halteanordnung für die Nabe aus einem Montagering (35) besteht, der in eine kreisförmige Nut in der Nabe eingreift.

6. Anordnung nach einem der Ansprüche 1 bis 4, dadurch gekennzeichnet, daß die axiale Halteanordnung für die Nabe durch eine Buchse (39) oder eine mit einem Gewinde (41) versehene Welle (40) besteht, die in ein Gewinde der Nabe eingreift, das in axialer Richtung durch eine Schulter (45) begrenzt ist, die sowohl als Anschlag für die Buchse (39) als auch für die Welle (40) dient.

## Claims

1. A rolling bearing assembly with a lateral pickup device of the type comprising at least a fixed race (25, 5, 55), a rotating race (21, 15, 65), rolling bodies disposed between said races, an encoder element (32, 70) disposed in a circular groove carried by the face of a disc (30, 38, 68) rotating in front of a pick element (23, 33, 63) which is fixed in respect of rotary movement to the rotating race (21, 15, 65) characterised in that the pick element (23, 33, 63) is fixed on the face of another fixed disc (28, 34, 62) which is fixed with respect to the fixed race (25, 5, 55) and that one or other of the encoder and pickup elements is axially prolonged by a hub (27, 37, 67) having a cylindrical surface and disposed coaxially with respect to the rolling bearing and between the lateral faces of the rotating race (21, 15, 65), of the latter.

2. An assembly according to claim 1 characterised in that the disc (28, 34, 62) carrying the pickup (23, 33, 63) further carries a signal processing circuit or a microprocessor as well as the connections of a connector (24, 47, 64).

3. An assembly according to claim 2 characterised in that the connector (24, 64) is disposed coaxially with respect to the rolling bearing and is of a diameter which is smaller than the diameter of the fixed part of the apparatus such as the axle (26) or a cylindrical cap (53).

4. An assembly according to claim 3 characterised in that the hub (37) of the encoder element defines an assembly space bearing a means (35) for axially retaining the hub.

5. An assembly according to either one of claims 1 and 4 characterised in that the means for axially retaining the hub is formed by an assembly ring (35) engaged into a circular groove in the hub.

6. An assembly according to either one of claims 1 and 4 characterised in that the means for axially retaining the hub is operative by means of a sleeve (39) or a shaft (40) carrying a screwthread (41) screwed into a tapping in the hub which is delimited axially by a shoulder (45) for said sleeve (39) and shaft (40) to bear thereagainst.

FIGURE 1

FIGURE 2

FIGURE 3

FIGURE 4

EP 0 326 454 B1

FIGURE 5

7